# EUROPÄISCHE PATENTSCHRIFT

(11) **EP 0 484 682 B1**
(45) Veröffentlichungstag und Bekanntmachung des Hinweises auf die Patenterteilung: **18.01.1995**
(21) Anmeldenummer: 91117095.9
(22) Anmeldetag: 08.10.1991
(51) Int. Cl.: F16D 25/10, F16H 57/08

(54) **Rastverbindung für zwei Trommelbauteile, insbesondere für eine hydraulisch betätigte Reibscheiben-Doppelkupplung eines automatischen Getriebes für Kraftfahrzeuge**
Snap-action connection for two drum parts, especially for a hydraulically activated double friction disc clutch in a motor vehicle automatic transmission
Verrouillage à crans pour deux éléments tambour, notamment pour un embrayage double à plateaux de friction à actionnement hydraulique d'un transmission automatique de véhicule automobile

(30) Priorität: 09.11.1990 DE 4035686
(43) Veröffentlichungstag der Anmeldung: 13.05.1992
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Biedermann, Sieghart, W-5024 Pulheim 1 (DE); Lauscher, Friedel, W-5166 Kreuzau-Drove (DE); Premiski, Vladimir, W-5358 Bad Münstereifel-Willerscheidt (DE)
(74) Vertreter: Messulam, Alec Moses

(56) Entgegenhaltungen:
- AU-A- 469 175
- DE-A- 1 801 253
- DE-A- 3 206 390
- FR-A- 2 363 722
- US-A- 3 321 999
- US-A- 4 724 745
- US-A- 4 945 782

## Beschreibung

Die Erfindung bezieht sich auf eine Rastverbindung für zwei Trommelbauteile, insbesondere für eine hydraulisch betätigte Reibscheiben-Doppelkupplung eines automatischen Getriebes für Kraftfahrzeuge, der im Oberbegriff des Patentanspruches 1 erläuterten Art.

Aus der DE-OS 16 30 950 ist eine hydraulisch betätigte Reibscheiben-Doppelkupplung, insbesondere zum Schalten von Planetenrädergetrieben von Kraftfahrzeugen bekannt, bei der zwei Trommelbauteile der Doppelkupplung über eine bajonettartige Rastverbindung miteinander zu einer einfacher montierbaren Baueinheit zusammengefaßt sind.

Die bajonettartige Rastverbindung macht ein axiales Ineinanderschieben der beiden Trommelbauteile und ein darauffolgendes Verdrehen in Umfangsrichtung erforderlich. Darüber hinaus muß bei den sich im Betrieb drehenden Trommelbauteilen ein ungewolltes Lösen der bajonettartigen Rastverbindung vermieden werden und dementsprechend muß zur Verdrehsicherung ein überdrückbares Gesperre vorgesehen werden.

Die bekannte Rastverbindung ist somit bei der Montage schwierig in der Handhabung und erfordert durch das zusätzliche Gesperre einen zusätzlichen Bauaufwand.

Aus der DE-PS 20 13 612 ist ein Planetenräderwechselgetriebe für Fahrzeuge, insbesondere für Kraftfahrzeuge bekannt, bei dem wieder zwei Trommelbauteile einer hydraulisch betätigten Reibscheiben-Doppelkupplung miteinander zu einer einfacher montierbaren Baueinheit verrastet sind, wobei die Verrastung in herkömmlicher Weise durch eine am einen Trommelbauteil vorgesehene Sprengringnut und einem darin eingesetzten, das andere Trommelbauteil teilweise übergreifenden Sprengring gebildet wird.

Bei dieser bekannten Reibscheiben-Doppelkupplung wird der mit den Reibscheiben zusammenwirkende Kupplungsträger über ein Axiallager an einem Zylinderansatz eines Mittelträgers des Getriebes abgestützt, auf dem der eine Trommelbauteil über ein Radial-Nadellager drehbar gelagert ist und von dem aus die hydraulische Versorgung der Zylinder/Kolbeneinheit erfolgt.

Die Montage und Demontage des die beiden Trommelbauteile verbindenden Sprengringes muß von Hand aus erfolgen.

Aus der US-A-3,321,999 ist eine Rastverbindung, bestehend aus zwei Trommelbauteilen für eine Kupplung in Form einer hydraulisch betätigbaren Reibscheiben-Doppelkupplung bekannt, wobei an einem Trommelbauteil axiale Ausnehmungen ausgebildet sind, die mit radialen Vorsprüngen am anderen Trommelbauteil zusammenwirken, um eine drehfeste Verbindung zu schaffen.

Die bekannte Rastverbindung weist den Nachteil auf, daß es sich lediglich um eine axial lose, nur in Drehrichtung drehfeste Steckverbindung handelt, wie dies insbesondere aus der Spalte 3, die Zeilen 17 und 18 und aus der Fig. 2 dieser Schrift klar zu entnehmen ist.

Dementsprechend weist diese Verbindung den Nachteil auf, daß die beiden Trommelbauteile während der Montage des automatischen Getriebes nicht -als eine vormontierte Baueinheit gehandhabt werden können.

Die Aufgabe der Erfindung ist es, eine Rastverbindung für zwei Trommelbauteile, insbesondere für eine hydraulisch betätigte Reibscheiben-Doppelkupplung eines automatischen Getriebes für Kraftfahrzeuge zu schaffen, die in ihrer Herstellung einfach und billig ist und auf einfachste Weise für eine automatisierte Montage geeignet ist, bei Bedarf im Reparaturfall sich jedoch auch mit einfachen Hilfsmitteln lösen läßt.

Gemäß der Erfindung wird diese Aufgabe gelöst, indem eine Rastverbindung für zwei Trommelbauteile, insbesondere für eine hydraulisch betätigte Reibscheiben-Doppelkupplung eines automatischen Getriebes für Kraftfahrzeuge, der im Oberbegriff des Patentanspruches 1 erläuterten Art, die im Kennzeichenteil des patentanspruches aufgezeigten Merkmale aufweist.

Dadurch, daß am einen Trommelbauteil eine umlaufende Rastnut ausgebildet ist oder zwei Rastausnehmungen angeordnet sind, am anderen topfförmigen Trommelbauteil zwei um 180 Grad versetzte, radial vorspringende Rastnocken ausgebildet sind und das eine topfförmige Trommelbauteil durch einfaches axiales Aufdrücken auf das andere Trommelbauteil durch ovales Aufweiten des anderen Trommelbauteiles im elastischen Bereich einrastend verbindbar ist, wird mit geringem Bauaufwand und bei einfachster Montage eine sichere axiale und radiale Verrastung erzielt.

Die um 180 Grad versetzten, radial vorspringenden Rastnokken sind mit auf die Rastnut oder Rastausnehmungen abgestimmten unterschiedlichen Ein- und Ausrastschrägen versehen.

Die Erfindung wird anhand eines in den beiliegenden Zeichnungen gezeigten Ausführungsbeispieles näher erläutert. Es zeigt:
- Fig. 1: einen vertikalen Teilschnitt durch ein automatisches Getriebes eines Kraftfahrzeuges im Bereich einer hydraulisch betätigten Reibscheiben-Doppelkupplung;

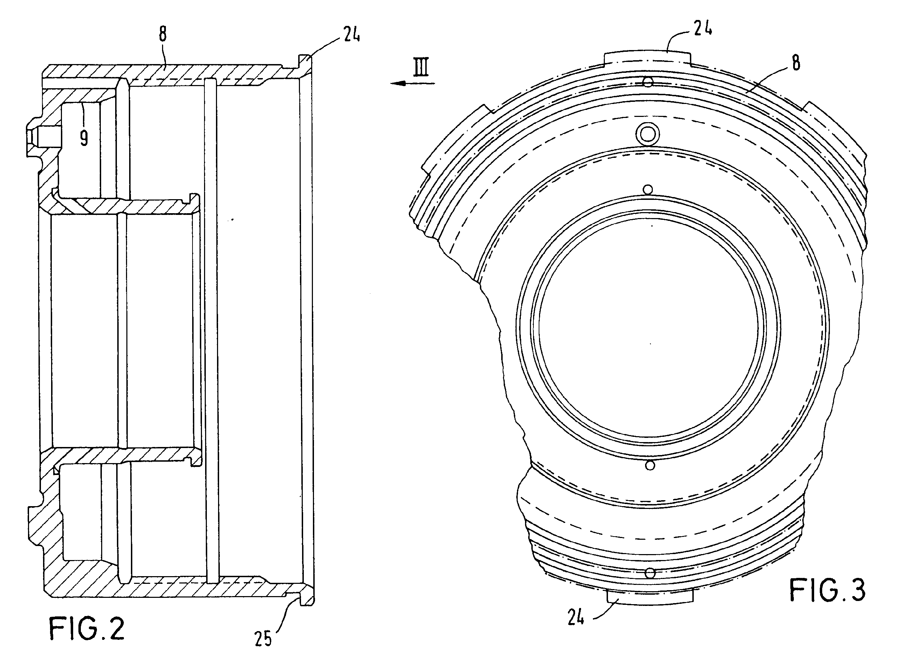

- Fig. 2: einen vertikalen Schnitt durch das eine Trommelbauteil der hydraulisch betätigten Reibscheiben-Doppelkupplung in vergrößerter Darstellung;
- Fig. 3: eine Axialansicht des einen Trommelbauteiles in Richtung des Pfeiles III in Fig. 2;

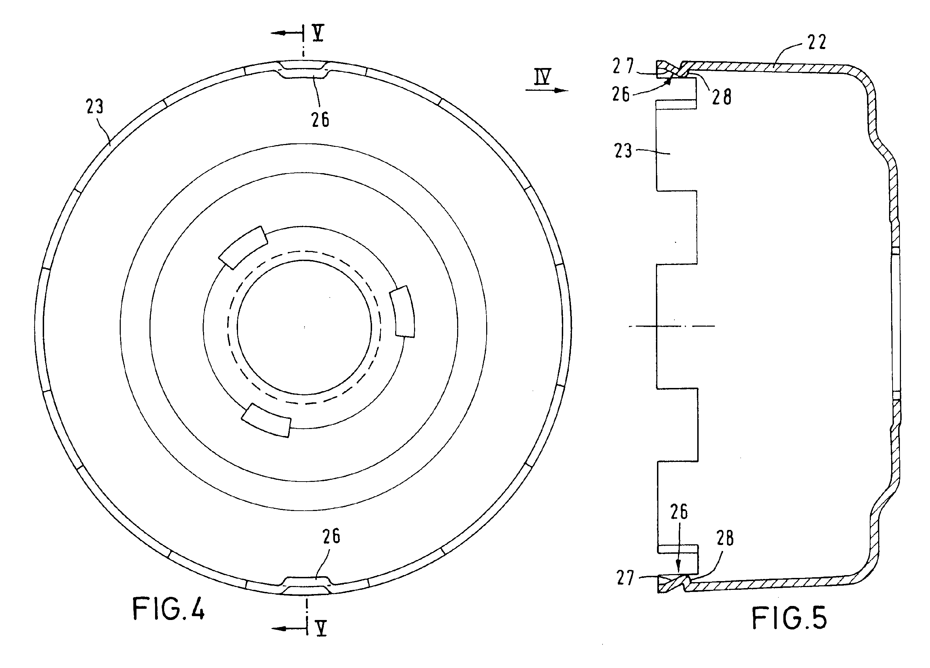

- Fig. 4: eine Axialansicht des anderen Trommelbauteiles in Richtung des Pfeiles IV in Fig. 5 und
- Fig. 5: einen vertikalen Schnitt entlang der Linie V-V in Fig. 4 durch den anderen Trommelbauteil in vergrößerter Darstellung.

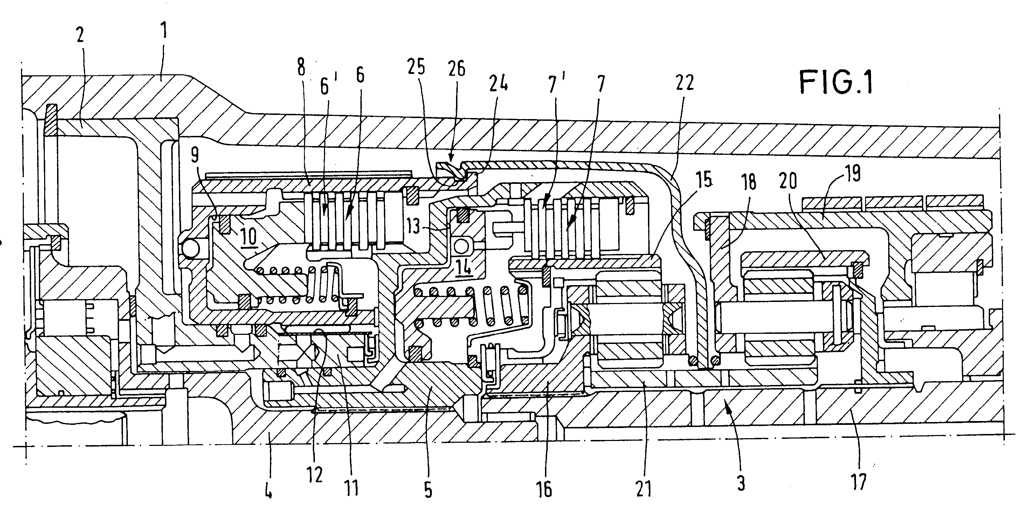

In Fig. 1 ist in einem Getriebegehäuse 1 in dem durch einen Mittelträger 2 abgetrennten hinteren Bauraum ein Planetenräder-Wechselgetriebe in Form eines Simpson-Satzes 3 angeordnet. Das Antriebsdrehmoment wird von einem nicht gezeigten Vorschalt-Planetenradsatz über eine Mittelwelle 4 in das Planetenräder-Wechselgetriebe 3 eingeleitet.

Auf der Mittelwelle 4 ist ein Kupplungsträgerbauteil 5 drehfest angeordnet, das an einem Außenumfang einen ersten Satz Reibscheiben 6 und an einem Innenumfang einen zweiten Satz Reibscheiben 7 in bekannter Weise drehfest aufnimmt.

Zwischen den Scheiben des ersten Satzes von Reibscheiben 6 ist ein weiterer erster Satz von Reibscheiben 6′ angeordnet, die mit ihren Außenumfängen drehfest am Innenumfang eines ersten topfförmigen Trommelbauteiles 8 angeordnet sind. Das topfförmige Trommelbauteil 8 bildet hierbei einen Ringzylinder 9, in dem ein Ringkolben 10 angeordnet ist, über den die ersten Sätze von Reibscheiben 6 und 6′ hydraulisch betätigbar sind. Das topfförmige Trommelbauteil 8 ist auf einen Zylinderansatz 11 des Mittelträgers 2 über ein Radial-Nagellager 12 drehbar gelagert, das auf einer Innenlaufringhülse läuft, die mit ihrem vorkragenden Enden das benachbarte Axial-Nadellager zentriert.

Im Kupplungsträgerbauteil 5 ist gleichfalls ein Ringzylinder 13 ausgebildet, der einen Ringkolben 14 aufnimmmt, über den zweite Sätze von Reibscheiben 7 und 7′ hydraulisch betätigbar sind. Zwischen dem zweiten Satz von Reibscheiben 7 ist ein weiterer Satz von Reibscheiben 7′ angeordnet, die mit ihren Innenumfängen mit dem Ringrad 15 des ersten Planetenradsatzes des Simpson-Satzes 3 verbunden sind.

Der Planetenradträger 16 des ersten Planetenradsatzes ist mit der Ausgangswelle 17 des Getriebes drehfest verbunden. Der Planetenradträger 18 des zweiten Planetenradsatzes des Simpson-Satzes 3 ist mit einer Bremstrommel 19 verbunden, während das Ringrad 20 des zweiten Planetenradsatzes des Simpson-Satzes 3 mit der Ausgangswelle 17 verbunden ist.

Das beiden Planetenradsätzen gemeinsame Sonnenrad 21 ist über ein topfförmiges Trommelbauteil 22 treibend mit dem ersten topfförmigen Trommelbauteil 8 verbunden.

Diese treibende Verbindung bestand bisher lediglich in axial einander überlappenden Laschen 23 und Vorsprüngen 24 die eine drehfeste Verbindung schafften, die jedoch ein axiales Auseinandergleiten der beiden topfförmigen Trommelbauteile nicht verhindern konnte. Dementsprechend mußte der eine topfförmige Trommelbauteil 8 früher über eine Axial-Anlaufscheibe am Mittelträger 2 abgestützt werden.

Gemäß der Erfindung wird eine Rastverbindung zwischen den beiden topfförmigen Trommelbauteilen 8 und 22 hergestellt. Diese Rastverbindung besteht aus einer am ersten Trommelbauteil 8 ausgebildeten, umlaufenden Rastnut 25 oder zwei Rastausnehmungen und zwei um 180 Grad versetzt angeordneten radial nach innen vorspringenden Rastnocken 26 am topfförmigen Trommelbauteil 22.

Die radial nach innen vorspringenden Rastnocken 26 weisen eine Einrastschräge 27 und eine Ausrastschräge 28 auf. Dadurch kann die Montage zum Verrasten der beiden Trommelbauteile 8 und 22 durch axiales Aufdrücken bewirkt werden, bei dem sich das Trommelbauteil 22 im elastischen Bereich oval aufweitet.

In ähnlicher Weise kann bei einer erforderlich werdenden Demontage durch Aufbringen einer um 90 Grad zu den Rastnocken 26 versetzt angreifenden Klemmkraft und eines axialen Zuges in Trennrichtung über die Ausrückschräge 28 ein Demontieren der beiden Trommelbauteile 8 und 22 erreicht werden.

Selbstverständlich müssen die für die Übertragung des Drehmomentes vorgesehenen Laschen 23 und Vorsprünge 24 ein ausreichendes Spiel in radialer Richtung aufweisen, damit das für den Montagevorgang erforderliche geringfügige ovale Aufweiten des Trommelbauteiles 22 möglich ist.

## Patentansprüche

1. Rastverbindung, bestehend aus zwei Trommelbauteilen für eine Kupplung in Form einer hydraulisch betätigten Reibscheiben-Doppelkupplung eines automatischen Getriebes für Kraftfahrzeuge, mit zwei Sätzen von Reibscheiben (6 und 6′ bzw. 7 und 7′), von denen die Reibscheiben abwechselnd mit ihren Außenumfängen drehfest am Innenumfang des einen Bauteiles und mit ihren Innenumfängen am Außenumfang eines Kupplungsträgerbauteiles angeordnet sind und zwischen einer ortsfesten Druckplatte und einem in einem Ringzylinder aufgenommenen Ringkolben hydraulisch betätigbar sind und wobei das eine Trommelbauteil mit dem anderen Trommelbauteil radial fest, jedoch bei Bedarf lösbar verbunden ist, wobei an einem Trommelbauteil (22) axiale Ausnehmungen ausgebildet sind, die mit radialen Vorsprüngen (24) am anderen Trommelbauteil (86) eine drehfeste Verbindung schaffend zusammenwirken,
**dadurch gekennzeichnet,** daß
- die Rastverbindung axial fest ist,
- am einen Trommelbaueil (8) eine umlaufende Rastnut (25) angeordnet ist oder zwei Rastausnehmungen ausgebildet sind,
- am anderen Trommelbauteil (22) zwei um 180 Grad versetzte, radial vorspringende Rastnocken (26) ausgebildet sind und
- das andere Trommelbauteil (22) durch axiales Aufdrücken auf das eine Trommelbauteil (8) durch ovales Aufweiten des Trommelbauteiles (22) im elastischen Bereich mit dem Trommelbauteil (8) einrastend verbindbar ist.

2. Rastverbindung, bestehend aus zwei Trommelbauteilen für eine Kupplung nach Anspruch 1,
**dadurch gekennzeichnet,** daß
- die um 180 Grad versetzten, radial nach innen vorspringenden Rastnocken (26) mit unterschiedlichen Ein- und Ausrastschrägen (27 und 28) ausgebildet sind.

## Claims

1. A locking connection comprising two drum members for a clutch in the form of a hydraulically actuated friction disc double clutch of an automatic gearbox for motor vehicles having two sets of friction discs (6, 6′ and 7, 7′ respectively), wherein the friction discs are arranged alternately with their outer circumference fixed non-rotatably to the inner circumference of the one member and with their inner circumference fixed to the outer circumference of a clutch carrier member and are hydraulically actuatable between a stationary pressure plate and an annular piston received in an annular cylinder, and wherein the one drum member is connected to the other drum member so as to be fixed radially but releasable in case of need, one drum member (22) having axial recesses formed in it which cooperate with radial projections (24) on the other drum member (86) to form a non-rotatable connection,
characterised in that
- the locking connection is axially fixed,
- one drum member (8) has a locking groove (25) formed around it or has two locking recesses in it,
- the other drum member (22) has two radially projecting locking lugs (26), offset by 180 degrees, formed on it, and
- the other drum member (22) can be lockingly connected to the one drum member (8) by axial pressure on the one drum member (8) through oval widening out of the drum member (22) in the elastic range.

2. A locking connection comprising two drum members for a clutch according to claim 1,
characterised in that
- the radially inwardly projecting locking lugs (26) offset by 180 degrees are formed with different engaging and disengaging bevels (27 and 28).

## Revendications

1. Liaison par enclenchement composée de deux éléments de tambour pour un embrayage sous forme d'embrayage double à disques de friction actionné par un système hydraulique d'une boîte de vitesses automatique pour véhicules à moteur, comportant deux jeux de disques de friction (6 et 6′ et 7 et 7′ respectivement) qui sont disposés en alternance avec leurs pourtours extérieurs de façon solidaire en rotation sur le pourtour intérieur de l'un des éléments et avec leurs pourtours intérieurs sur le pourtour extérieur d'un élément de support de l'embrayage, et qui peuvent être actionnés par un système hydraulique entre une plaque de pression fixe et un piston annulaire logé dans un cylindre annulaire, l'un des éléments de tambour étant relié fixement, ou de façon amovible si nécessaire, à l'autre élément de tambour dans la direction radiale, sachant que sur un élément de tambour (22) sont réalisés des évidements axiaux qui coopèrent avec des saillies radiales (24) placées sur l'autre élément de tambour (8) en formant unc liaison solidaire en rotation, caractérisée en ce que la liaison par enclenchement est fixe dans la direction axiale, en ce que sur l'un des éléments de tambour (8) est placée une rainure d'enclenchement circulaire (25) ou sont réalisés deux évidements d'enclenchement, en ce que sur l'autre élément de tambour (22) sont réalisés deux ergots d'enclenchement (26) faisant saillie radialement et décalés de 180 degrés, et en ce que l'autre élément de tambour (22) peut être relié par enclenchement à l'élément de tambour (8) en appuyant axialement sur le premier élément de tambour (8) et en élargissant l'élément de tambour (22) dans le domaine élastique de manière à le rendre ovale.

2. Liaison par enclenchement composée de deux éléments de tambour pour un embrayage selon la revendication 1, caractérisée en ce que les ergots d'enclenchement (26) faisant saillie radialement vers l'intérieur et décalés de 180 degrés sont réalisés avec des chanfreins d'enclenchement et de déclenchement (27 et 28) différents.
